# EUROPÄISCHE PATENTSCHRIFT

(11) **EP 3 590 760 B1**
(45) Veröffentlichungstag und Bekanntmachung des Hinweises auf die Patenterteilung: **06.12.2023**
(21) Anmeldenummer: 19020413.1
(22) Anmeldetag: 02.07.2019
(51) Int. Cl.: B60N 2/862, B60N 2/865

(54) **KOPFSTÜTZE**
HEADREST
APPUIE-TÊTE

(30) Priorität: 05.07.2018 DE 102018005316
(43) Veröffentlichungstag der Anmeldung: 08.01.2020
(73) Patentinhaber: GRAMMER AG, 92289 Ursensollen (DE)
(72) Erfinder: Nuss, Ralph, 92284 Poppenricht (DE); Delling, Gerhard, 92546 Schmidgaden (DE); Himmelhuber, Erwin, 92237 Sulzbach (DE); Bösl, Manuel, 92272 Freudenberg (DE); Keller, Hubert, 92245 Kümmersbruck (DE)
(74) Vertreter: Roche, von Westernhagen & Ehresmann

(56) Entgegenhaltungen:
- WO-A1-2008/068372
- WO-A1-2014/122379
- CN-A- 1 774 354
- US-A1- 2012 068 517

## Beschreibung

Die Erfindung betrifft eine Kopfstütze.

Die Aufgabe wurde gelöst durch eine Kopfstütze mit den Merkmalen des Anspruchs 1.

Eine solche Kopfstütze ist aus der DE 10 2010 007 942 A1 bekannt. Die Kopfstütze umfasst ein Halteblech, welches an der Rückenlehne eines Fahrzeugsitzes befestigt ist. An dem Halteblech sind zwei parallel angeordnete obere und untere Streben angelenkt, die gelenkig mit einem Kopfanlageteil verbunden sind. Das Kopfanlageteil kann auf diese Weise zwischen einer hinteren und einer vorderen Position bewegt werden. Die oberen Streben sind mit einer Verzahnung versehen, die mit einem schwenkbaren Riegel lösbar in Eingriff gebracht werden können, um das Kopfanlageteil in der eingestellten Position zu verriegeln.

Aus WO 2008/068372 A1 ist eine Kopfstütze mit einem Kopfanlageteil bekannt, welches relativ zu einem Basisteil zwischen zwei Endpositionen bewegbar ist. Zwei Lenker sind jeweils an dem Basisteil und an dem Kopfanlageteil angelehnt. Mit einer Verriegelungsvorrichtung ist das Kopfanlageteil in der eingestellten Position verriegelbar.

Es war Aufgabe der Erfindung, eine Kopfstütze zu schaffen, die in der Seitenansicht schmal gebaut ist. Außerdem war es Aufgabe der Erfindung, die Kopfstütze mit einer funktionssicheren Verriegelungsvorrichtung auszustatten, mit welcher das Kopfanlageteil in der eingestellten Position sicher verriegelbar ist.

Die erfindungsgemäße Kopfstütze umfasst ein Kopfanlageteil, welches mittels einer Haltevorrichtung an einer Struktur eines Fahrzeugs, lagerbar ist. Der Begriff Haltevorrichtung bezeichnet im Sinne der Erfindung alle Vorrichtungen, die zur Befestigung an der Struktur geeignet sind. Alle Teile, die mittelbar mit der Struktur in Verbindung stehen, sind im Sinne der Erfindung ebenfalls Struktur des Fahrzeugs, z.B. Fahrzeugsitz, Fahrzeugkonsole, Wand oder Boden des Fahrzeugs.

Das Kopfanlageteil ist relativ zu der Haltevorrichtung mittels einer Verstellvorrichtung nach vorne zu dem Kopf eines Benutzers und in entgegengesetzte Richtung zurück bewegbar. Die Bewegung muss dabei keine geradlinige Bewegung in der X-Ebene sein, die Bewegung kann lediglich Anteile einer solchen Bewegung aufweisen.

Die Verstellvorrichtung umfasst wenigstens einen ersten Lenker und einen zweiten Lenker, wobei jeder Lenker mit dem Kopfanlageteil und mit der Haltevorrichtung wenigstens ein Gelenk bildet. Die Formulierung "mit dem Kopfanlageteil ein Gelenk bildet" ist im Sinne der Erfindung derart aufzufassen, dass das Gelenk auch mit einem Teil gebildet sein kann, welches mit dem Kopfanlageteil verbunden ist, wie z.B. einem Tragteil an welchem das Kopfanlageteil unbewegbar oder bewegbar gehalten ist. Wenigstens zwei Lenker sind in x-Richtung hintereinander angeordnet.

Die Verstellvorrichtung umfasst eine Verriegelungsvorrichtung mit welcher eine Relativbewegung zwischen der Haltevorrichtung und dem Kopfanlageteil lösbar blockiert werden kann. Die Verriegelungsvorrichtung ist zwischen einer Riegelposition, in welcher eine Relativbewegung zwischen der Haltevorrichtung und dem Kopfanlageteil in wenigstens eine Richtung blockiert ist, und einer Löseposition, in welcher die Relativbewegung möglich ist, bewegbar.

Die Verriegelungsvorrichtung umfasst erste Verriegelungsmittel, die an wenigstens einem Lenker gehalten sind und zweite Verriegelungsmittel, die dem Kopfanlageteil oder der Haltevorrichtung zugeordnet sind, wobei die Verriegelungsmittel lösbar in Eingriff bringbar sind. Die Verriegelungsmittel müssen nicht unmittelbar an dem Lenker oder dem Kopfanlageteil befestigt sein. Sie können auch an Teilen angeordnet sein, die mit dem Kopfanlageteil bzw. mit dem Lenker verbunden sind. In der Riegelposition sind die ersten Verriegelungsmittel und die zweiten Verriegelungsmittel in Eingriff, in der Löseposition sind die Verriegelungsmittel außer Eingriff.

Gemäß einem ersten Aspekt der Erfindung weisen der erste Lenker und der zweite Lenker parallel zueinander angeordnete Arme auf. Zwischen den parallelen Armen ist ein Abstand gebildet. Jeder Lenker weist z.B. zwei Arme auf, die in parallelen Ebenen bewegbar sind, wobei sich die Ebenen in x-Richtung erstrecken.

Gemäß einem zweiten Aspekt der Erfindung sind wenigstens zwei Lenker in x-Richtung hintereinander angeordnet. Auch bei diesem Aspekt können der erste Lenker und der zweite Lenker z.B. parallel zueinander angeordnete Arme aufweisen, wobei zwischen den parallelen Armen ein Abstand gebildet ist. Jeder Lenker weist z.B. zwei Arme auf, die in parallelen Ebenen bewegbar sind, wobei sich die Ebenen sich in x-Richtung erstrecken.

Die parallelen Arme sind gemäß einer Ausführungsform mittels einer Traverse miteinander verbunden. Es wird damit eine größere Stabilität durch Versteifung erreicht. Die parallelen Arme können alternativ auch lediglich durch das Teil bewegungsverbunden sein, mit welchem sie ein Gelenk bilden, d.h. mit der Haltevorrichtung oder dem Kopfanlageteil.

Jeder Arm bildet z.B. ein Gelenk mit dem Kopfanlageteil und ein Gelenk mit der Haltevorrichtung.

Die ersten Verriegelungsmittel weisen z.B. Formschlussmittel, insbesondere in Form einer Verzahnung auf und die zweiten Verriegelungsmittel weisen komplementäre Formschlussmittel auf. Aufgrund der zusammenwirkenden Formschlussmittel wird eine Relativbewegung zwischen dem Kopfanlageteil und dem Lenker oder zwischen der Haltevorrichtung und dem Lenker verhindert. Mit den Formschlussmitteln wird ein funktionssicheres Bewegen der Verriegelungsvorrichtung zwischen der Riegelposition und der Löseposition sowie eine sichere Verriegelung ermöglicht.

Die ersten Verriegelungsmittel sind z.B. an einem Endbereich des Lenkers ausgebildet. Der Endbereich des Lenkers kann der Haltevorrichtung zugewandt sein oder alternativ von der Haltevorrichtung abgewandt, d.h. dem Kopfanlageteil zugewandt sein. Bei einer Blockierung der Relativbewegung von dem Kopfanlageteil und wenigstens einem Lenker sind die ersten Verriegelungsmittel z.B. der Haltevorrichtung abgewandt. In diesem Fall muss kein großer Abstand zwischen dem Endbereich des Lenkers und dem Kopfanlageteil überwunden werden. Die ersten Verriegelungsmittel und/oder die zweiten Verriegelungsmittel sind z.B. auf einer Kreisbahn ausgebildet.

Die zweiten Verriegelungsmittel sind z.B. wenigstens einem bewegbaren Riegel zugeordnet, welcher zwischen der Riegelposition und der Löseposition bewegbar an dem Kopfanlageteil oder an der Haltevorrichtung gehalten ist. Die Bewegungsbahn des Riegels ist z.B. unterschiedlich zu der Bewegungsbahn des Kopfanlageteils. Die Bewegungsbahn des Riegels ist z.B. quer zu der Bewegungsbahn des Kopfanlageteils ausgerichtet. Während die Bewegung des Kopfanlageteils in x-Richtung stattfindet, kann z.B. die Bewegung des Riegels in y-Richtung stattfinden.

Zwei Ausführungsbeispiele der Erfindung sind in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Es zeigen:
Fig. 1 eine perspektivische Ansicht eines ersten Ausführungsbeispiels der erfindungsgemäßen Kopfstütze schräg von vorne, wobei das Kopfanlageteil in einer vorderen Position angeordnet ist,
Fig. 2 eine perspektivische Ansicht der Kopfstütze gemäß Fig. 1 von schräg hinten,
Fig. 3 eine rückwärtige Ansicht der Kopfstütze,
Fig. 4 eine Schnittansicht der Kopfstütze gemäß Schnittlinie A - A in Fig. 3,
Fig. 5 eine Schnittansicht gemäß Schnittlinie B - B in Fig. 3,
Fig. 6a eine Schnittansicht in Anlehnung an Fig. 4, wobei das Kopfanlageteil in einer hinteren Position angeordnet ist,
Fig. 6b eine Ausschnittdarstellung gemäß Ausschnittlinie E in Fig. 4, wobei Bereiche des Tragteils der Übersichtigkeit halber nicht dargestellt sind,
Fig. 6c eine Ausschnittdarstellung gemäß Ausschnittlinie F in Fig. 6a, wobei Bereiche des Tragteils der Übersichtigkeit halber nicht dargestellt sind,
Fig. 6d eine Einzelteildarstellung des Riegels 28a,
Fig. 6e eine Ansicht gemäß Ansichtspfeil G in Fig. 6d,
Fig. 7 eine perspektivische Ansicht eines zweiten Ausführungsbeispiels der erfindungsgemäßen Kopfstütze von schräg vorne, wobei das Kopfanlageteil in einer hinteren Position angeordnet ist,
Fig. 8 eine perspektivische Ansicht der Kopfstütze gemäß Fig. 7 von schräg hinten,
Fig. 9 eine rückwärtige Ansicht der Kopfstütze,
Fig. 10 eine Schnittansicht der Kopfstütze gemäß Schnittlinie C - C in Fig. 9,
Fig. 11 eine Schnittansicht gemäß Schnittlinie D - D in Fig. 9, wobei sich die Verriegelungsvorrichtung in der Riegelposition befindet,
Fig. 12 eine Schnittansicht in Anlehnung an Fig. 11, wobei die Verriegelungsvorrichtung in einer Löseposition angeordnet ist, und
Fig. 13 eine Schnittansicht in Anlehnung an Fig. 10, wobei das Kopfanlageteil in einer vorderen Position angeordnet ist.

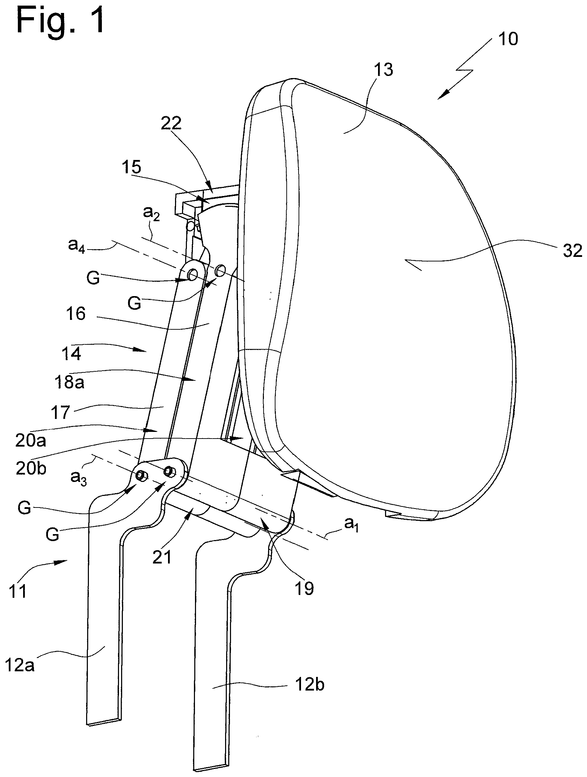

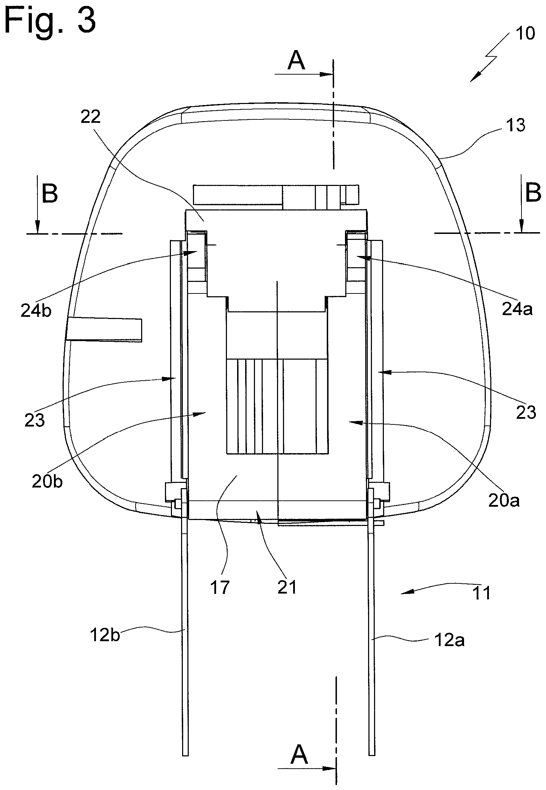

Eine Kopfstütze gemäß einem ersten Ausführungsbeispiel insgesamt ist in den Fig. 1 bis 6 mit dem Bezugszeichen 10 bezeichnet.

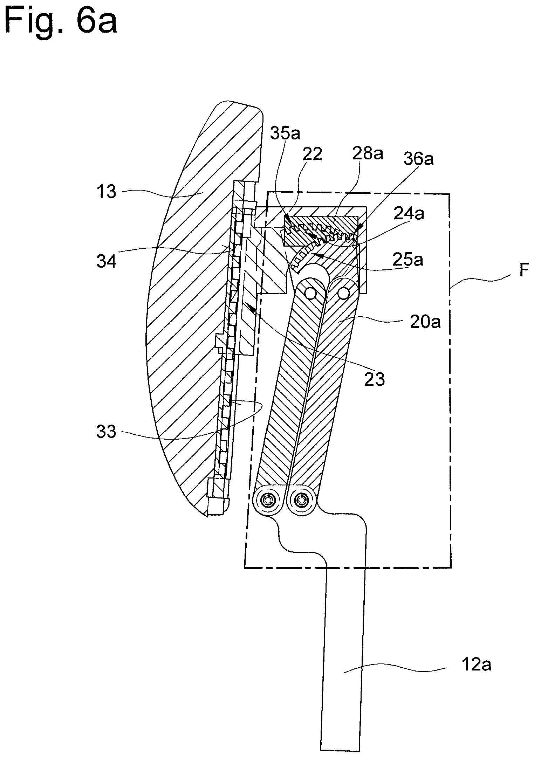

Die Kopfstütze umfasst eine Haltevorrichtung 11, die im vorliegenden Ausführungsbeispiel Tragstangen 12a und 12b aufweist. Anstelle der Tragstangen 12a und 12b könnte die Haltevorrichtung alternativ auch einen Tragstangenbügel aufweisen. Im vorliegenden Ausführungsbeispiel ist die Haltevorrichtung 11 in üblicher Weise an der Struktur einer Rückenlehne befestigbar. Ferner umfasst die Kopfstütze 10 ein Kopfanlageteil 13 mit einer Kopfanlagefläche 32, welches mit einer Verstellvorrichtung 14 derart an der Haltevorrichtung 11 gelagert ist, dass es zwischen einer in den Fig. 1 bis 4 dargestellten vorderen Position und einer in Fig. 6a dargestellten hinteren Position bewegbar ist.

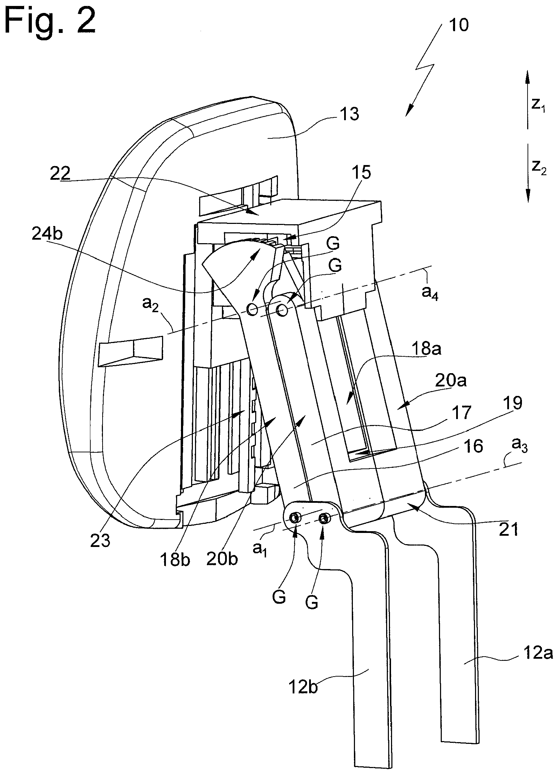

Mittels einer Verriegelungsvorrichtung 15 (siehe Fig. 2) ist das Kopfanlageteil in unterschiedlichen Positionen verriegelbar.

Die Verstellvorrichtung 14 umfasst einen ersten Lenker 16 sowie einen zweiten Lenker 17 hintereinander in x-Richtung. Der Lenker 16 ist u-förmig aufgebaut und umfasst Arme 18a und 18b sowie eine die Arme 18a und 18b verbindende Traverse 19. In gleicher Weise ist der Lenker 17 u-förmig ausgebildet. Er umfasst Arme 20a und 20b sowie eine Traverse 21, welche die Arme 20a und 20b verbindet. Alternativ zu dieser Ausführungsform könnten die Arme 18a und 18b und die Arme 20a und 20b nicht mittels einer Traverse untereinander verbunden sein. Mit den Traversen 19 und 21 wird aber eine höhere Stabilität erreicht.

An einem unteren Endbereich, welcher von der Traverse 19 geformt ist, bildet der erste Lenker 16 jeweils ein Gelenk G mit den Tragstangen 12a und 12b, derart dass der erste Lenker 16 um eine Schwenkachse a1 relativ zu den Tragstangen 12a und 12b schwenkbar ist. An einem oberen Endbereich bildet jeder Arm 18a sowie 18b ein Gelenk G mit einem Tragteil 22, an welchem das Kopfanlageteil 13 höhenverstellbar gehalten ist. Auf diese Weise ist das Tragteil 22 um eine Schwenkachse a2 relativ zu dem ersten Lenker 16 schwenkbar.

In gleicher Weise bildet der zweite Lenker 17 an einem unteren Endbereich, welcher von der Traverse 21 geformt ist, Gelenke G mit den Tragstangen 12a und 12b, so dass eine Schwenkachse a3 gebildet ist. In einem oberen Endbereich des Lenkers 17 bildet jeder Arm 20a und 20b ein Gelenk G mit dem Tragteil 22, wobei die Gelenke G eine Schwenkachse a4 definieren. Die fest angeordneten Tragstangen 12a und 12b, die Lenker 16 und 17 sowie das Tragteil 22 bilden auf diese Weise ein Koppelgetriebe. Das Kopfanlageteil 13 ist damit entlang einer Koppelkurve bewegbar an der Haltevorrichtung 11 gelagert, wobei eine Bewegung in die Richtungen x1 oder x2 und eine Bewegung in die Richtungen z1 oder z2 erfolgt.

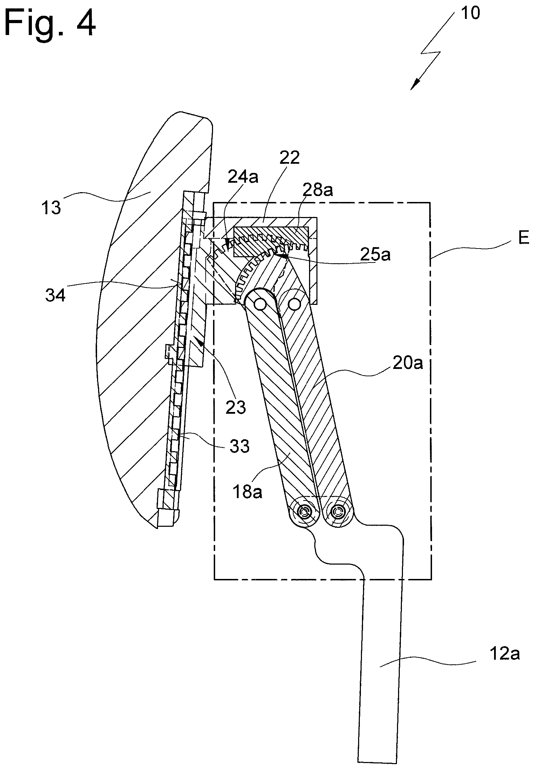

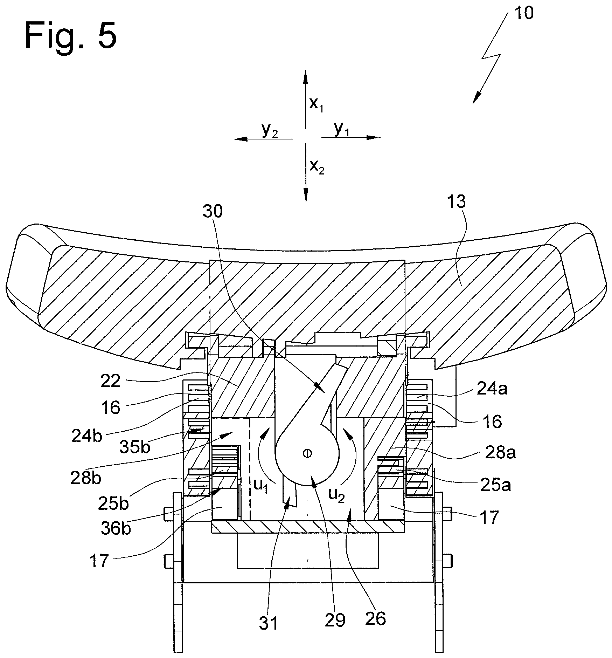

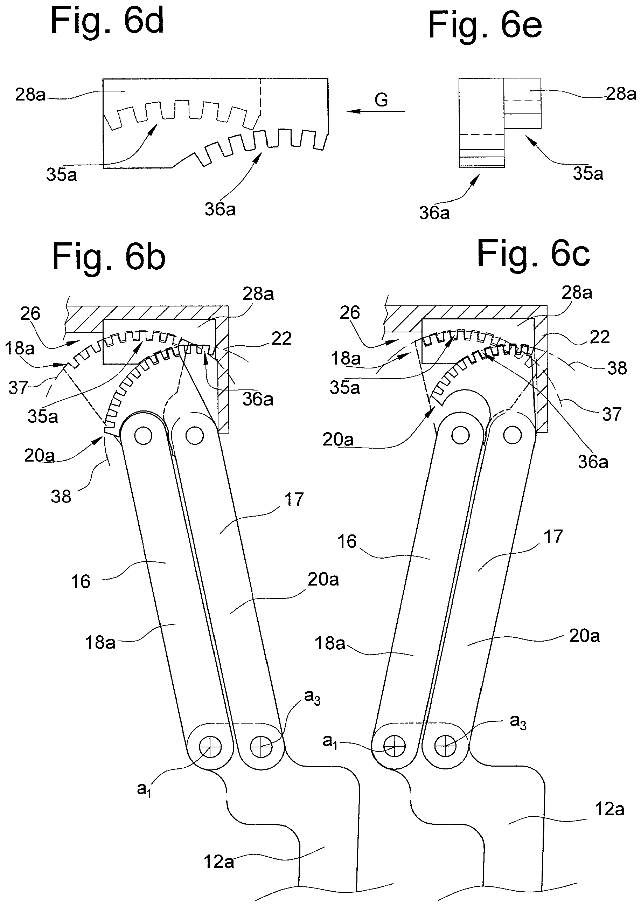

An einem oberen von der Haltevorrichtung 11 abgewandten Endbereich weisen der Arm 18a des ersten Lenkers 16 Verriegelungsmittel 24a und der Arm 18b Verriegelungsmittel 24b auf (siehe die Fig. 4 und 5). Diese sind in Form einer Verzahnung ausgebildet, die sich entlang einer Kreisbahn um die Schwenkachse a2 erstreckt. Der Kopfkreis der Kreisbahn der Verriegelungsmittel 24a ist in den Fig. 6c und 6d mit 37 bezeichnet. In gleicher Weise weist der Arm 20a des zweiten Lenkers 17 an einem oberen Endbereich Verriegelungsmittel 25a und der Arm 20b Verriegelungsmittel 25b auf, die die Form einer Verzahnung haben, welche sich entlang einer Kreisbahn um die Schwenkachse a4 erstreckt. Der Kopfkreis der Kreisbahn der Verriegelungsmittel 25a ist in den Fig. 6c und 6d mit 38 bezeichnet.

In einem Aufnahmeraum 26 des Tragteils 22 sind ein Riegel 28a sowie ein Riegel 28b bewegbar (Der Riegel 28b ist in Fig. 5 lediglich durch eine gestrichelte Linie angedeutet) aufgenommen. Der Riegel 28a weist Verriegelungsmittel 35a und 36a auf, die mit den Verriegelungsmitteln 24a und 25a zusammenwirken. Der Riegel 28b weist Verriegelungsmittel 35b und 36b auf, die mit den Verriegelungsmitteln 24b und 25b zusammenwirken. Der Riegel 28a lässt sich auf diese Weise lösbar in Eingriff mit den Verriegelungsmitteln 24a und 25a der Lenker 16 und 17 bewegen. In gleicher Weise lässt sich der Riegel 28b lösbar in Eingriff mit den Verriegelungsmitteln 24b und 25b bewegen.

Wenn sich die Verriegelungsvorrichtung 15 in einer Riegelposition befindet, d.h., dass die Verriegelungsmittel 35a und 36a in Eingriff mit den Verriegelungsmitteln 24a und 25a stehen und die Verriegelungsmittel 35b und 36b mit den Verriegelungsmitteln 24b und 25b in Eingriff stehen, können sich die Lenker 16 und 17 nicht um die Achsen a2 und a4 relativ zu dem Tragteil 22 drehen, d.h., dass eine Bewegung des Kopfanlageteils 13 in wenigstens eine Richtung blockiert ist.

In einer Löseposition der Verriegelungsvorrichtung 15 sind die Verriegelungsmittel der Riegel 27 und 28 außer Eingriff mit den Verriegelungsmitteln der Lenker 16 und 17, d.h. die Verstellvorrichtung 14 ist frei bewegbar und das Kopfanlageteil 13 kann zwischen der vorderen und der hinteren Position in die Richtungen x1 und x2 bewegt werden. Die Löseposition ist in den Fig. nicht dargestellt.

Die Betätigung der Verriegelungsvorrichtung 15 ist nicht dargestellt. Z.B. kann an dem Kopfanlageteil 13, an dem Tragteil 22 oder an einer beliebigen anderen Stelle ein Schalter vorgesehen sein, wobei die Bewegung des Schalters auf eine Bewegung der Riegel 27 und 28 mittels einer Übertragungsvorrichtung übertragen wird. Die Bewegung der Riegel 27 und 28 erfolgt im vorliegenden Ausführungsbeispiel über einen Hebel 29 (siehe Fig. 5), welcher Teil einer solchen Übertragungsvorrichtung ist. Der Hebel 29 ist um eine Schwenkachse a5 schwenkbar an dem Tragteil 22 gelagert. Der Hebel 29 weist Arme 30 und 31 auf, wobei der Arm 30 mit dem Riegel 28a und der Arm 31 mit dem Riegel 28b in Kontakt steht. Schwenkt der Hebel 29 in Richtung u1 im Uhrzeigersinn gemäß Fig. 6, werden der Riegel 28b in Richtung y1 und der Riegel 28a in Richtung y2 in die Löseposition bewegt.

Die Riegel 27 und 28 sind derart federbelastet, dass bei der Bewegung in die Löseposition eine Federenergie aufgebaut wird, welche die Riegel 28a und 28b in die Riegelposition zurück belastet. Bei einer Entlastung des Hebels 29 werden die Riegel 28a und 28b daher automatisch in die Riegelposition gemäß Fig. 5 zurückbewegt.

Der Vollständigkeit halber ist noch zu erwähnen, dass das Kopfanlageteil 13 in die Richtungen z1 und z2 höhenverstellbar an dem Tragteil 22 geführt ist und mit einer Arretiervorrichtung 23 in unterschiedlichen Höhenpositionen arretierbar ist. Die Arretiervorrichtung 23 umfasst dem Kopfanlageteil 13 zugeordnete Arretiermittel 33 sowie dem Tragteil 22 zugeordnete Arretiermittel 34.

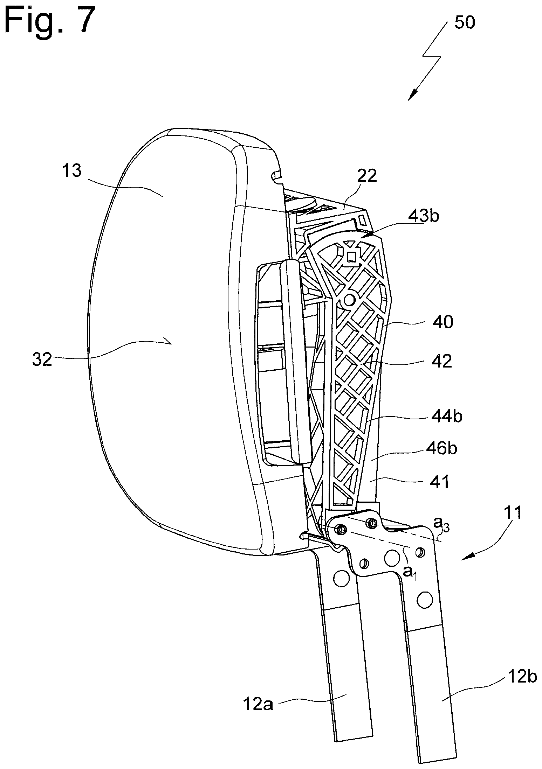

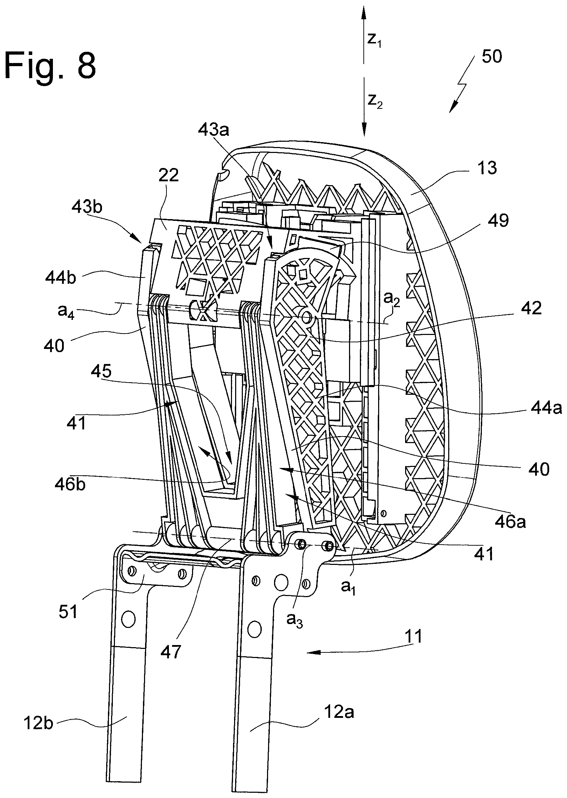

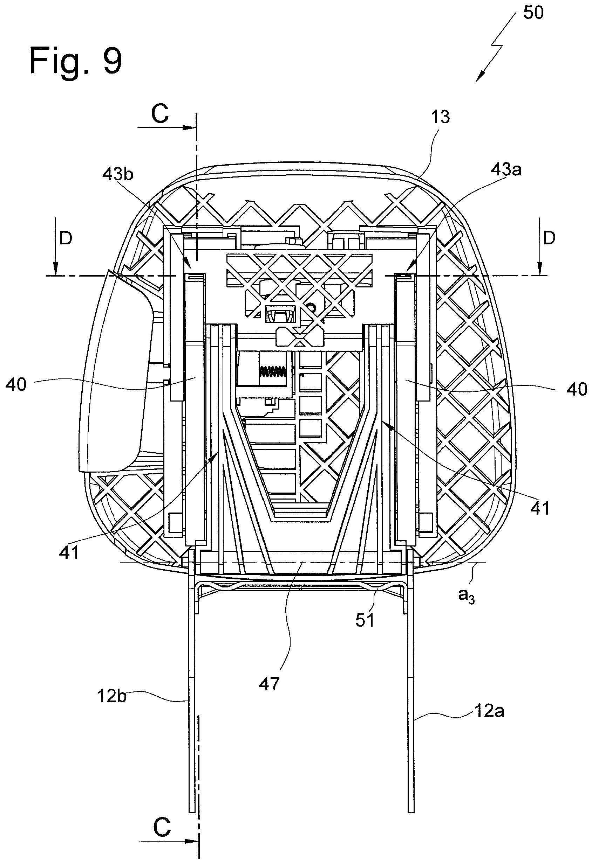

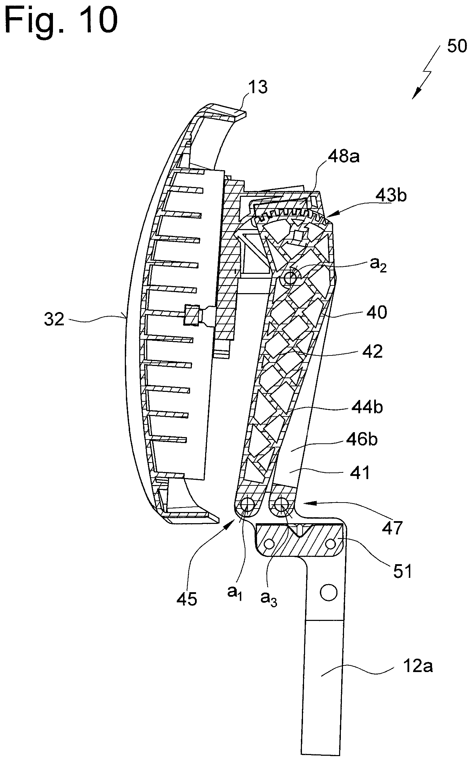

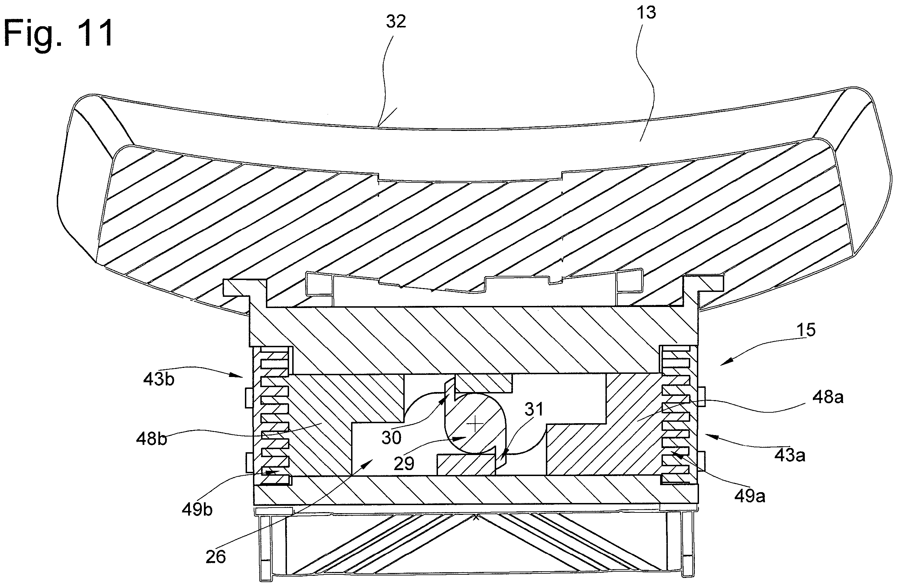

Bei einem zweiten, in den Figuren 7 bis 13 dargestellten Ausführungsbeispiel einer Kopfstütze 50, weist die Verstellvorrichtung 14 einen ersten Lenker 40 sowie einen zweiten Lenker 41 auf, die sich von den Lenkern 16 und 17 dadurch unterscheiden, dass die Lenker 40 und 41 aus Kunststoff ausgebildet sind. Wie in Fig. 7 zu sehen ist, ist der erste Lenker 40 größer ausgebildet und mit Rippen 42 versehen, die der Stabilisierung dienen.

Außerdem weicht das zweite Ausführungsbeispiel von dem ersten Ausführungsbeispiel dadurch ab, dass lediglich der erste Lenker 40 Verriegelungsmitteln 43a und 43b in Form einer Verzahnung versehen ist. Die Lenker 40 und 41 haben trotz ihrer abweichenden Form ebenfalls eine u-förmige Gestalt. Der Lenker 40 ist mit Armen 44a und 44b sowie einer die Arme 44a und 44b verbindenden Traverse 45 geformt. Der Lenker 41 weist Arme 46a und 46b sowie eine die Arme 46a und 46b verbindende Traverse 47 auf. Ferner sind die Tragstangen 12a und 12b mittels eines Verbindungsteils 51 mit einander verbunden.

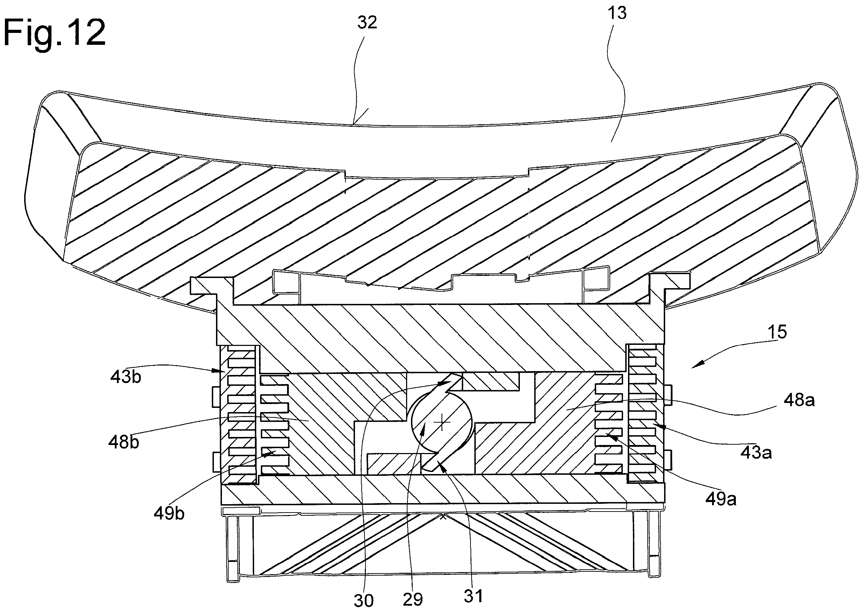

Die Verriegelungsmittel 43a sind an einem oberen, von der Haltevorrichtung 11 abgewandten Endbereich des Arms 44a und die Verriegelungsmittel 43b sind an einem oberen Endbereich des Arms 44b des Lenkers 40 angeordnet. Gemäß Fig. 12 weist die Verriegelungsvorrichtung 15 zwei Riegel 48a und 48b auf, welche in dem Aufnahmeraum 26 angeordnet sind und sich in die Richtungen y1 und y2 bewegen lassen. In der Riegelposition stehen Verriegelungsmittel 49a des Riegels 48a in Eingriff mit den Verriegelungsmitteln 43a und Verriegelungsmittel 49b des Riegels 48b in Eingriff mit den Verriegelungsmitteln 43b.

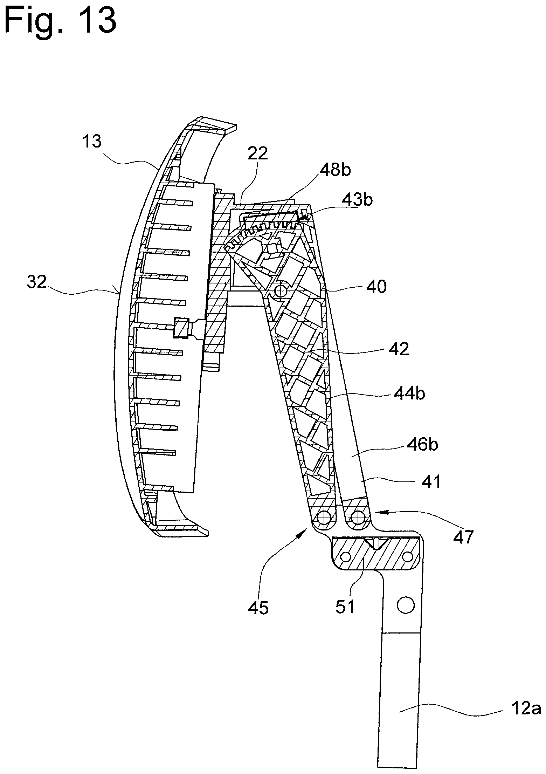

Bei einer Bewegung des Hebels 29 in Richtung u1 im Uhrzeigersinn gemäß Fig. 12 wird der Riegel 48a entgegen der Rückstellkraft in Richtung y1 und der Riegel 48b entgegen der Rückstellkraft in Richtung y2 bewegt. Die Verriegelungsvorrichtung 15 ist dann gemäß Fig. 13 in der Löseposition. Bei Entlastung des Riegels 29 werden der Riegel 48a wieder in Richtung y2 und der Riegel 48b in Richtung y1 in die Riegelposition bewegt.

In den übrigen Merkmalen stimmt das zweite Ausführungsbeispiel mit dem ersten Ausführungsbeispiel im Wesentlichen überein.

## Patentansprüche

1. Kopfstütze mit einem Kopfanlageteil (13), welches mittels einer Haltevorrichtung (11) an einer Struktur eines Fahrzeugs, insbesondere an einem Fahrzeugsitz, lagerbar ist, wobei das Kopfanlageteil (13) relativ zu der Haltevorrichtung (11) mittels einer Verstellvorrichtung (14) nach vorne zu dem Kopf eines Benutzers und in entgegengesetzte Richtung zurück bewegbar ist, wobei die Verstellvorrichtung (14) wenigstens einen ersten Lenker (16, 40) und einen zweiten Lenker (17, 41) umfasst, wobei jeder Lenker (16, 17, 40, 41) mit einer das Kopfanlageteil (13) umfassenden Kopfanlagevorrichtung und mit der Haltevorrichtung (11) wenigstens ein Gelenk bildet und wobei mittels einer Verriegelungsvorrichtung (15) eine Relativbewegung zwischen der Haltevorrichtung (11) und dem Kopfanlageteil (13) lösbar blockierbar ist, wobei die Verriegelungsvorrichtung (14) erste Verriegelungsmittel (24a, 24b, 25a, 25b, 43a, 43b) aufweist, die an wenigstens einem Lenker (16, 17, 40) ausgebildet sind und zweite Verriegelungsmittel (35a, 35b, 36a, 36b, 49a, 49b) aufweist, die dem Kopfanlageteil (13) oder der Haltevorrichtung (11) zugeordnet sind, wobei die ersten Verriegelungsmittel und die zweiten Verriegelungsmittel lösbar in Eingriff bringbar sind, **dadurch gekennzeichnet, dass** in Verstellrichtung (x1, x2) der erste Lenker (16, 40) und der zweite Lenker (17, 41) jeweils zwei parallel zueinander angeordnete Arme (18a, 18b, 20a, 20b, 44a, 44b, 46a, 46b) aufweisen und dass zwischen den parallelen Armen ein Abstand gebildet ist.

2. Kopfstütze **nach dem Oberbegriff** des Anspruchs 1, **dadurch gekennzeichnet, dass** wenigstens zwei Lenker in x-Richtung hintereinander angeordnet sind.

3. Kopfstütze nach Anspruch 1 oder 2, **dadurch gekennzeichnet, dass** die ersten Verriegelungsmittel (24a, 24b, 25a, 25b, 43a, 43b) Formschlussmittel, insbesondere in Form einer Verzahnung umfassen und die zweiten Verriegelungsmittel (35a, 35b, 36a, 36b, 49a, 49b) komplementäre Formschlussmittel umfassen.

4. Kopfstütze nach einem der vorangehenden Ansprüche, **dadurch gekennzeichnet, dass** die ersten Verriegelungsmittel (24a, 24b, 25a, 25b, 43a, 43b) an einem oberen Endbereich des Lenkers (16, 17, 40) ausgebildet sind.

5. Kopfstütze nach einem der vorangehenden Ansprüche, **dadurch gekennzeichnet, dass** die zweiten Verriegelungsmittel (35a, 35b, 36a, 36b, 49a, 49b) wenigstens einem bewegbaren Riegel (28a, 28b, 48a, 48b) zugeordnet sind, welcher zwischen der Riegelposition und der Löseposition bewegbar an der Kopfanlagevorrichtung oder an der Haltevorrichtung (11) gehalten ist.

6. Kopfstütze nach einem der vorangehenden Ansprüche, soweit dieser auf Anspruch 2 rückbezogen ist, **dadurch gekennzeichnet, dass** in Verstellrichtung (x1, x2) der erste Lenker (16, 40) und der zweite Lenker (17, 41) jeweils zwei parallel zueinander angeordnete Arme (18a, 18b, 20a, 20b, 44a, 44b, 46a, 46b) aufweisen und dass zwischen den parallelen Armen ein Abstand gebildet ist.

7. Kopfstütze nach Anspruch 6, **dadurch gekennzeichnet, dass** die parallelen Arme (18a, 18b, 20a, 20b, 44a, 44b, 46a, 46b) mittels einer Traverse (19, 21, 45, 47) miteinander verbunden sind.

8. Kopfstütze nach einem der vorangehenden Ansprüche, **dadurch gekennzeichnet, dass** jeder Arm (18a, 18b, 20a, 20b, 44a, 44b, 46a, 46b) ein Gelenk (G) mit der Kopfanlagevorrichtung und ein Gelenk (G) mit der Haltevorrichtung (11) bildet.

9. Kopfstütze nach einem der vorangehenden Ansprüche, **dadurch gekennzeichnet, dass** die Haltevorrichtung (11) mit den Lenkern (16, 17, 40, 41) und dem Kopfanlageteil (13) ein Viergelenk bildet.

10. Kopfstütze nach einem der vorangehenden Ansprüche, **dadurch gekennzeichnet, dass** jeder Lenker (16, 17, 40, 41) wenigstens ein Gelenk (G) mit der Haltevorrichtung (11) und ein Gelenk (G) mit einem Tragteil (22) der Kopfanlagevorrichtung bildet, an welchem das Kopfanlageteil (11), insbesondere höhenverstellbar, gelagert ist.

11. Kopfstütze nach einem der vorangehenden Ansprüche, **dadurch gekennzeichnet, dass** der Riegel (28a, 28b, 48a, 48b) in einem Aufnahmeraum (26) bewegbar aufgenommen ist, welcher an der Kopfanlagevorrichtung ausgebildet ist.

## Claims

1. Headrest having a head support part (13) that can be mounted on a structure of a vehicle, in particular on a vehicle seat, by means of a fixing device (11), wherein the head support part (13) can be moved forwards towards the head of a user and back in the opposite direction relative to the fixing device (11) by means of a displacement device (14), wherein the displacement device (14) comprises at least one first control link (16, 40) and one second control link (17, 41), wherein each control link (16, 17, 40, 41) forms at least one joint with a head support device comprising the head support part (13) and with the fixing device (11), and wherein a relative movement between the fixing device (11) and the head support part (13) can be releasably blocked by means of a locking device (15), wherein the locking device (14) has first locking means (24a, 24b, 25a, 25b, 43a, 43b) that are formed on at least one control link (16, 17, 40) and second locking means (35a, 35b, 36a, 36b, 49a, 49b) that are assigned to the head support part (13) or the fixing device (11), wherein the first locking means and the second locking means are releasably engageable, **characterised in that** the first control link (16, 40) and the second control link (17, 41) respectively have two arms (18a, 18b, 20a, 20b, 44a, 44b, 46a, 46b) that are arranged in parallel with each other in the displacement direction (x1, x2), and **in that** a spacing is formed between the parallel arms.

2. Headrest **according to the preamble** of claim 1, **characterised in that** at least two control links are arranged one behind the other in the x direction.

3. Headrest according to claim 1 or 2, **characterised in that** the first locking means (24a, 24b, 25a, 25b, 43a, 43b) comprise form-fitting means, in particular in the form of a toothing, and the second locking means (35a, 35b, 36a, 36b, 49a, 49b) comprise complementary form-fitting means.

4. Headrest according to one of the preceding claims, **characterised in that** the first locking means (24a, 24b, 25a, 25b, 43a, 43b) are formed on an upper end region of the guide link (16, 17, 40).

5. Headrest according to one of the preceding claims, **characterised in that** the second locking means (35a, 35b, 36a, 36b, 49a, 49b) are assigned to at least one moveable bolt (28a, 28b, 48a, 48b), which is fixed moveably between the bolted position and the released position to the head support device or to the fixing device (11).

6. Headrest according to one of the preceding claims where it refers back to claim 2, **characterised in that** the first control link (16, 40) and the second control link (17, 41) respectively have two arms (18a, 18b, 20a, 20b, 44a, 44b, 46a, 46b) that are arranged in parallel with each other in the displacement direction (x1, x2), and **in that** a spacing is formed between the parallel arms.

7. Headrest according to claim 6, **characterised in that** the parallel arms (18a, 18b, 20a, 20b, 44a, 44b, 46a, 46b) are connected to each other by means of a crossbar (19, 21, 45, 47).

8. Headrest according to one of the preceding claims, **characterised in that** each arm (18a, 18b, 20a, 20b, 44a, 44b, 46a, 46b) forms a joint (G) with the head support device and a joint (G) with the fixing device (11).

9. Headrest according to one of the preceding claims, **characterised in that** the fixing device (11) forms a four-bar linkage with the control links (16, 17, 40, 41) and the head support part (13).

10. Headrest according to one of the preceding claims, **characterised in that** each control link (16, 17, 40, 41) forms at least one joint (G) with the fixing device (11) and one joint (G) with a carrying part (22) of the head support device, on which the head support part (11) is mounted, in particular in a height-adjustable manner.

11. Headrest according to one of the preceding claims, **characterised in that** the bolt (28a, 28b, 48a, 48b) is moveably received in a receiving chamber (26) that is formed on the head support device.

## Revendications

1. Appuie-tête comprenant une partie de contact de tête (13) qui peut être montée par l'intermédiaire d'un dispositif de retenue (11) sur une structure d'un véhicule, en particulier sur un siège de véhicule, dans lequel la partie de contact de tête (13) peut être déplacée par rapport au dispositif de retenue (11) au moyen d'un dispositif de réglage (14) vers l'avant en direction de la tête d'un utilisateur et vers l'arrière dans la direction opposée, dans lequel le dispositif de réglage (14) comprend au moins une première biellette (16, 40) et une seconde biellette (17, 41), dans lequel chaque biellette (16, 17, 40, 41) forme au moins une articulation avec un dispositif de support de tête comprenant la partie de contact de tête (13) et avec le dispositif de retenue (11), dans lequel un déplacement relatif entre le dispositif de retenue (11) et la partie de contact de tête (13) peut être bloqué de façon libérable à l'aide d'un dispositif de verrouillage (15), dans lequel le dispositif de verrouillage (14) comprend des premiers moyens de verrouillage (24a, 24b, 25a, 25b, 43a, 43b) formés sur au moins une biellette (16, 17, 40) et des seconds moyens de verrouillage (35a, 35b, 36a, 36b, 49a, 49b) associés à la partie de contact de tête (13) ou au dispositif de retenue (11), et dans lequel les premiers moyens de verrouillage et les seconds moyens de verrouillage peuvent être mis en prise de façon détachable, **caractérisé en ce que**, dans la direction de réglage (x1, x2), la première biellette (16, 40) et la seconde biellette (17, 41) comportent chacune deux bras (18a, 18b, 20a, 20b, 44a, 44b, 46a, 46b) qui sont agencés parallèlement l'un à l'autre, et **en ce qu'**un espace est formé entre les bras parallèles.

2. Appuie-tête selon le terme générique de la revendication 1, **caractérisé en ce qu'**au moins deux biellettes sont agencées l'une derrière l'autre dans la direction x.

3. Appuie-tête selon la revendication 1 ou 2, **caractérisé en ce que** les premiers moyens de verrouillage (24a, 24b, 25a, 25b, 43a, 43b) comprennent des moyens d'engagement positif, qui se présentent en particulier sous la forme d'une denture, et les seconds moyens de verrouillage (35a, 35b, 36a, 36b, 49a, 49b) comprennent des moyens d'engagement positif complémentaires.

4. Appuie-tête selon l'une quelconque des revendications précédentes, **caractérisé en ce que** les premiers moyens de verrouillage (24a, 24b, 25a, 25b, 43a, 43b) sont formés sur région d'extrémité supérieure de la biellette (16, 17, 40).

5. Appuie-tête selon l'une quelconque des revendications précédentes, **caractérisé en ce que** les seconds moyens de verrouillage (35a, 35b, 36a, 36b, 49a, 49b) sont associés à au moins un verrou mobile (28a, 28b, 48a, 48b) qui est maintenu mobile sur le dispositif de support de tête ou sur le dispositif de retenue (11) entre la position de verrouillage et la position de libération.

6. Appuie-tête selon l'une quelconque des revendications précédentes, dans la mesure où celle-ci se rapporte à la revendication 2, **caractérisé en ce que**, dans la direction de réglage (x1, x2), la première biellette (16, 40) et la seconde biellette (17, 41) comportent chacune deux bras (18a, 18b, 20a, 20b, 44a, 44b, 46a, 46b) qui sont agencés parallèlement l'un à l'autre, et **en ce qu'**un espace est formé entre les bras parallèles.

7. Appuie-tête selon la revendication 6, **caractérisé en ce que** les bras parallèles (18a, 18b, 20a, 20b, 44a, 44b, 46a, 46b) sont reliés entre eux par une traverse (19, 21, 45, 47).

8. Appuie-tête selon l'une quelconque des revendications précédentes, **caractérisé en ce que** chaque bras (18a, 18b, 20a, 20b, 44a, 44b, 46a, 46b) forme une articulation (G) avec le dispositif de support de tête et une articulation (G) avec le dispositif de retenue (11).

9. Appuie-tête selon l'une quelconque des revendications précédentes, **caractérisé en ce que** le dispositif de retenue (11) forme une quadruple articulation avec les biellettes (16, 17, 40, 41) et la partie de contact de tête (13).

10. Appuie-tête selon l'une quelconque des revendications précédentes, **caractérisé en ce que** chaque biellette (16, 17, 40, 41) forme au moins une articulation (G) avec le dispositif de retenue (11) et une articulation (G) avec un élément de support (22) du dispositif de support de tête, sur laquelle la partie de contact de tête (13) est montée, en particulier d'une façon réglable en hauteur.

11. Appuie-tête selon l'une quelconque des revendications précédentes, **caractérisé en ce que** le verrou (28a, 28b, 48a, 48b) est reçu de façon mobile à l'intérieur d'un espace de réception (26) qui est formé sur le dispositif de support de tête.
